# EUROPÄISCHE PATENTSCHRIFT

(11) **EP 0 318 832 B1**
(45) Veröffentlichungstag und Bekanntmachung des Hinweises auf die Patenterteilung: **14.07.1993**
(21) Anmeldenummer: 88119565.5
(22) Anmeldetag: 24.11.1988
(51) Int. Cl.: B01D 35/30

(54) **Filtervorrichtung**
Filtering device
Dispositif de filtration

(30) Priorität: 28.11.1987 DE 3740418
(43) Veröffentlichungstag der Anmeldung: 07.06.1989
(73) Patentinhaber: Wolf, Joachim, D-71263 Weil der Stadt (DE)
(72) Erfinder: Wolf, Joachim, D-71263 Weil der Stadt (DE)
(74) Vertreter: Kessl, Josef

(56) Entgegenhaltungen:
- EP-A- 0 231 862
- CA-A- 1 050 899
- DE-A- 2 657 155

## Beschreibung

Die Erfindung betrifft eine Filtervorrichtung gemäß dem Oberbegriff des Anspruches 1.

Beispielsweise in der DE-A 35 20 139 ist eine derartige Filtervorrichtung beschrieben. Grundsätzlich ist bei diesen bekannten Filtervorrichtungen die Oberwand als vom übrigen Gehäuseteil trennbarer Deckel ausgebildet und zwar weil sie als fester Bestandteil der Anlage betriebsmäßig unlösbar mit den Zufuhr- und Abfuhrleitungen verbunden bleibt. Um die Filtervorrichtung zu reinigen oder eine Filterpatrone auszuwechseln, wird der becherförmige Gehäuseteil vom Deckel abgeschraubt. Sowohl aus Gründen der zuverlässigen Dichtung als auch der Befestigung sind kreisförmige Querschnitte des Gehäuses bei Filtervorrichtungen der gattungsgemäßen Größenordnung ausschließlich praktiziert. Nachteilig hierbei ist vor allem folgendes:
a) Die Öffnung des Filtergehauses in bzw. an der Anlage beim Reinigen oder Austauschen einer Filterpatrone hat oft zur Folge, daß Flüssigkeit ausläuft;
b) zum Öffnen des Filtergehäuses muß um dieses herum viel Platz frei sein, um einerseits mit einem Werkzeug anzukommen und andererseits um den becherartigen Gehäuseteil vom Deckel abziehen zu können. Zudem stellt der Kreisquerschnitt ohnehin eine ungünstige Nutzung vorhandener Einbauräume dar;
c) Mehrkammerfilter sind zufolge der Abdichtprobleme, die das trennbare Gehause aufwirft, nicht wirtschaftlich zu realisieren;
d) Eine Rückspülreinigung des Filters ist nur durch anlagenseitiges Umschalten der Strömungsrichtung der Flüssigkeit möglich.

Es sind auch Gehäuse für Filter bekannt (DE-A 26 57 155 und EP-A 0 231 862), die einen runden Querschnitt aufweisen und zumindest in einer der Stirnseiten Anschlußkupplungen in Form von Schnell-Kupplungen tragen.

Aufgabe der Erfindung ist es daher, eine Filtervorrichtung der gattungsgemäßen Art so weiterzubilden, daß sie platzsparend unter optimaler Raumausnutzung untergebracht und problemlos gewartet werden kann.

Diese Aufgabe wird durch die Merkmale des Anspruchs 1 gelöst.

Es ist jetzt das Filtergehäuse betriebsmäßig eine feste Einheit und wird zwecks Wartung, Reinigung oder Austausch jeweils komplett aus der Anlage genommen bzw. in diese eingesetzt. Es ist keine empfindliche trennbare Dichtung zwischen Gehäuseteilen vorhanden, so daß völlige Freiheit bei der Gestaltung des Gehäusequerschnitts (ja der Gehäuseform generell) besteht. So kann das Gehäuse optimal an die Platzverhältnisse eines Gerätes, wie z.B. eines Getränkeautomaten, angepaßt werden. Insbesondere kann es würfel- oder quaderförmig sein mit optimaler Platzausnutzung. Das Gehäuseinnere kann ebenfalls völlig frei gegliedert und gestaltet werden. So kann vor allem das Volumen in zwei (oder mehr) in strömungsrichtung hintereinanderliegende Kammern gleicher Querschnittsform mit einer jeweils etwa der Höhe des Gehäuses entsprechenden Länge (in Strömungsrichtung gesehen) gegliedert werden. Dies ergibt eine optimale Kontaktzeit der zu filternden Flüssigkeit mit dem Filtermaterial (z.B. Aktivkohle, Harz). Falls im System eine Rückspülreinigung vorgesehen ist, kann dies ohne aufwendige Installation bewirkt werden, einfach indem die Filtervorrichtung mit vertauschten Stutzen verdreht eingesetzt wird.

Gemäß Anspruch 1 ist das Einsetzen und Austauschen einer Filtervorrichtung besonders einfach und schnell durchzuführen. Insbesondere auch bei beengten Platzverhältnissen wirkt sich dies günstig aus. Wenn zudem Schnellkupplungen mit eingebautem Rückflußsperrventil vorgesehen werden, wird ein Auslaufen von Flüssigkeit an der Seite der Anlage und/oder der Filtervorrichtung verhindert, wenn diese ausgetauscht wird. Dies ist besonders bei aggressiven Flüssigkeiten vorteilhaft.

Die Filtervorrichtung kann als Wegwerf-Filter konzipiert sein oder als regenerierbarer Filter. In letzterem Fall kann das Filter in einer Regenerationsanlage z.B. ausgespült werden, ohne daß dazu das Gehäuse geöffnet wird. Es kann aber auch sein, daß nicht regenerierbare Filtermaterialien ausgetauscht werden sollen, wofür dann eine Ausgestaltung gemäß Anspruch 6 besonders zweckmäßig ist. Durch diese entsprechend große Bohrung kann z.B. verbrauchte Aktivkohle entnommen und frische eingefüllt werden.

Günstige Strömungsverhältnisse für eine gute Filterwirkung ergeben sich gemäß den Größenverhältnissen nach den Ansprüchen 7 bis 9.

Die symmetrische Ausbildung nach Anspruch 10 empfiehlt sich vor allem dann, wenn auch die Anordnung des Filtermaterials im Inneren symmetrisch ist, so daß es egal ist, in welcher Richtung die Flüssigkeit durchfließt. Man braucht dann beim Einsetzen der Filtervorrichtung in eine Anlage nicht besonders auf die Anschlußzuordnung zu achten. An schwer zugänglichen Stellen kann so eine Filtervorrichtung also auch blind eingesetzt werden.

Ein ovaler Gehäusequerschnitt gemäß Anspruch 12 ist ein Mittelding zwischen der Zylinderform, die bei kleinsten Wandstärken dem vorgeschriebenen Innendruck standhält, und der Quaderform, die den vorhandenen Raum optimal nutzt.

Weitere Vorteile und Ausgestaltungen der Erfindung ergeben sich aus der nachfolgenden Beschreibung von in der Zeichnung dargestellten bevorzugten Ausführungsbeispielen.

Es zeigt:
- Figur 1: eine Seitenansicht, teilweise geschnitten, einer ersten Ausführungsform der Erfindung,
- Figur 2: eine Schnittansicht in der Ebene 2-2 von Figur 1,
- Figur 3: eine Seitenansicht, teilweise geschnitten, einer zweiten Ausführungsform der Erfindung,
- Figur 4: eine Ansicht in Pfeilrichtung 4 von Figur 3 und
- Figur 5: eine Ansicht in Pfeilrichtung 5 von Figur 3.

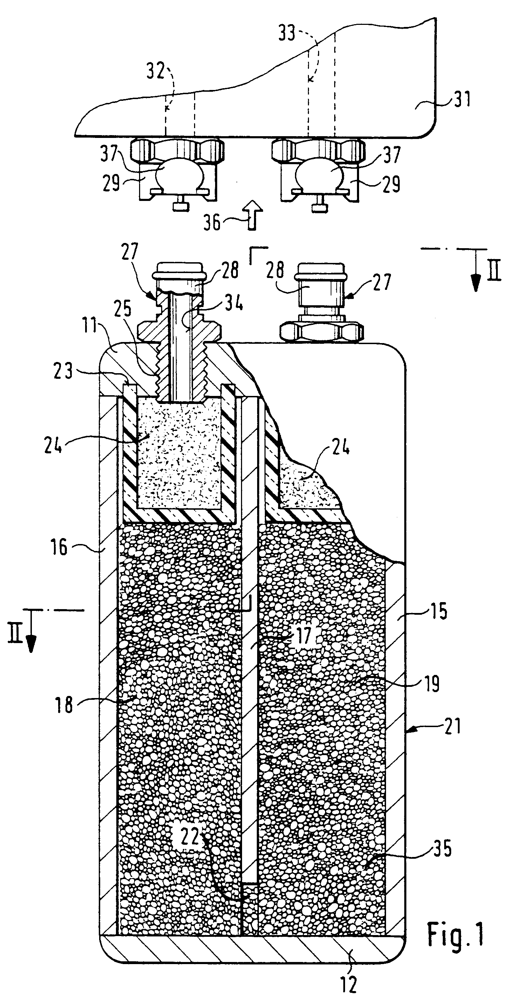

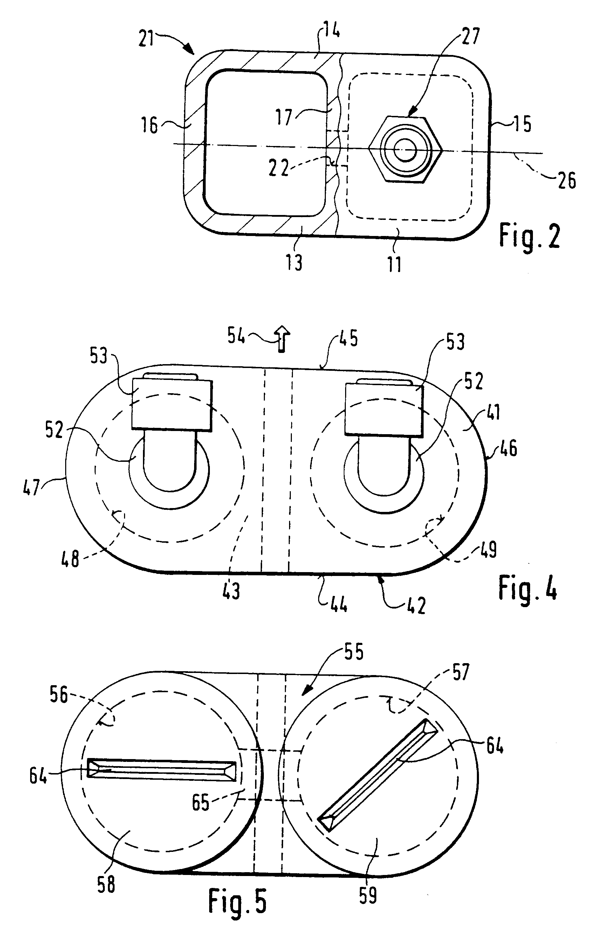

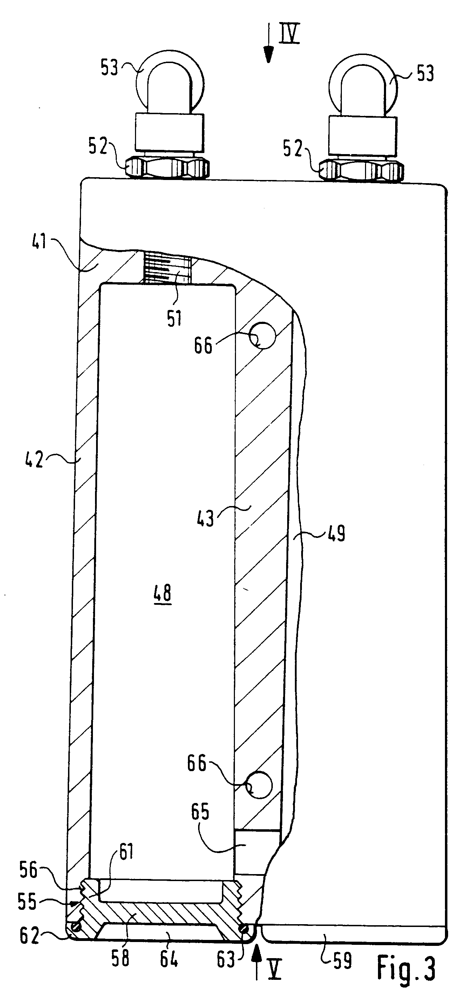

Gemäß Figur 1 und 2 ist das Filtergehäuse prismenförmig ausgebildet, mit einer rechteckigen Oberwand 11, einer rechteckigen Unterwand 12, zwei rechteckigen Längswänden 13, 14 und zwei rechteckigen Querwänden 15, 16. Die Oberwand 11 ist die Haupttragwand und daher besonders stabil ausgebildet. Sie ist biegesteif und dicker als die angrenzenden Wände 13 bis 16, die zusammen eine Umfangswand bilden. Der Innenraum ist durch eine im wesentlichen rechteckige Trennwand 17 in zwei gleiche Teilräume 18 und 19 gegliedert, die flüssigkeitsdicht mit der Oberwand 11 und den Längswänden 13, 14 abschließt. Vorzugsweise sind die Umfangswand und die Trennwand 17 ein einstückiger Abschnitt eines im Querschnitt (siehe Figur 2) etwa 8-förmigen Strangpreßprofiles 21, auf das oben und unten die Oberwand 11 und die Unterwand 12 angeschweißt wird.

Vor dem Verschließen des Strangpreßprofiles 21 wird unten in der Mitte der Trennwand 17 ein Teil entfernt, so daß im Endzustand ein Kanal 22 frei bleibt, der die beiden Teilräume 18 und 19 verbindet.

An der Innenfläche der Oberwand 11 befinden sich zwei kreisförmige Nuten 23, wovon die in Figur 1 links gezeichnete dem Teilraum 18 zugeordnet ist und die andere (in Figur 1 nicht sichtbare) Nut in gleicher Weise dem Teilraum 19 zugeordnet ist. In jeder dieser Nuten 23 ist der Rand eines becherförmigen porösen Filtereinsatzes 24 verankert.

In der Oberwand 11 sind zwei senkrecht zu ihrer Ebene ausgerichtete Bohrungen 25 mit Innengewinde vorgesehen, wovon in der Schnittansicht der Figur 1 nur die linke zu sehen ist. Der rechte Teil ist dazu symmetrisch ausgebildet. Die beiden Bohrungen sind auf einer geometrischen Mittellinie 26 (Figur 2) und symmetrisch zu einer senkrecht dazu verlaufenden Symmetrieachse angeordnet. Im Beispiel handelt es sich um ein Innengewinde von etwa 12 mm. Da die Oberwand 11 ebenfalls etwa 12 mm dick ist, erhält man somit eine stabile Verankerung für mit einem korrespondierenden Außengewinde versehene Einlaß- und Auslaßstutzen 27. Diese sind im Beispiel mit Kupplungsenden 28 versehen, die als Gegenstücke zu Rohr-Schnellkupplungen 29 bekannter Art ausgebildet sind.

Die Axialbohrungen 34 der beiden Einlaß- bzw. Auslaßstutzen 27 münden jeweils innerhalb der Filtereinsätze 24. Zur Komplettierung der Filtervorrichtung wird also die vormontierte Oberwand 11 (mit Einlaß- und Auslaßstutzen 27 und Filtereinsätzen 24) mit dem Strangpreßprofil 21 verschweißt.Von der offenen Unterseite her wird dann in die beiden Teilräume 18 und 19 Aktivkohle 35 eingefüllt und dann die Unterwand 12 abschließend mit dem Strangpreßprofil 21 verschweißt.

Nur schematisch angedeutet ist ein anlagenseitiger Armaturenblock 31, an dem die zwei Rohr-Schnellkupplungen 29 verankert sind, zu denen eine Zufuhrleitung 32 bzw. eine Abfuhrleitung 33 führt. Wenn eine fertige Filtervorrichtung in Pfeilrichtung 36 gegen den Armaturenblock geschoben wird, erfolgt somit der Anschluß in äußerst einfacher und schneller Weise. Ist die Aktivkohle 35 verbraucht, drückt man auf die Riegel 37 und zieht zugleich die Filtervorrichtung entgegen der Pfeilrichtung 36 zurück. Ebenso rasch wird eine neue Filtervorrichtung eingesetzt.

Die Filtervorrichtung von Figur 1 ist besonders für Getränkeautomaten vorgesehen, um das Leitungswasser zu reinigen, insbesondere darin enthaltene Stoffe (wie z.B. Chlor) zu binden, die den Geschmack des Getränks beeinträchtigen würden. Dieses gefilterte Wasser wird dann mit einem speziellen Getränkekonzentrat oder z.B. Kaffeepulver vermischt zur Bildung des gewünschte Getränks. Da sich die Aktivkohle in zwei strömungsmäßig aufeinanderfolgenden Teilräumen 18 und 19 befindet, hat das Wasser eine ausreichend lange Kontaktzeit mit der Aktivkohle für eine gute Filterwirkung. Herkömmliche Filtervorrichtungen mußten wegen ihres Platzbedarfs stets separat vom Automaten installiert werden, was unpraktisch und unschön ist. Außerdem mußte neben dem Stellplatz für den Automaten noch ein Zugang zum Filter eingeplant werden. Das flache rechteckförmige Filtergehäuse gemäß Figur 1 jedoch läßt sich noch im vorhandenen Raum der bislang üblichen Automaten unterbringen. Auch der Austausch einer Filtervorrichtung beansprucht kaum mehr Platz als die Filtervorrichtung. Lediglich in Steckrichtung (Pfeil 36) benötigt man eine Freiheit von 15 mm, der Länge der Kupplungsenden entsprechend.

Die Rohr-Schnellkupplungen 28, 29 sind unter der Bezeichnung CPC - Quick Coupling eines amerikanischen Herstellers im Handel erhältlich.

Sie enthalten im oberen Teil 29 Sperrventile, die nur dann öffnen, wenn die jeweiligen Kupplungsenden 28 eingesteckt und verriegelt sind. Während des Austauschs der Filtervorrichtung kann daher keine Flüssigkeit aus der Anlage auslaufen. Man kann auch Kupplungsenden 28 mit ähnlichen Sperrventileinsätzen vorsehen, die dann ein Auslaufen der Flüssigkeit aus der abmontierten Filtervorrichtung verhindern. Dies is vorwiegend dann zweckmäßig, wenn es sich um aggressive Flüssigkeiten handelt.

Im Ausführungsbeispiel der Figuren 3 bis 5 besteht das Filtergehäuse mit der Oberwand 41, der ovalen Umfangswand 42 und der Trennwand 43 aus einem einstückigen spritzgegossenen Teil aus Polyethylen. Bei diesem prismenförmigen Gehäuse hat die Oberwand 41 zwei parallel gegenüberliegende gerade äußere Längsränder 44, 45, die endseitig je durch einen halbkreisförmigen Rand 46, 47 verbunden sind. Die Länge der geraden Längsränder 44, 45 beträgt im Beispiel 52 mm, während der Durchmesser der Ränder 46, 47 etwas kleiner, nämlich 50 mm ist. Die beiden Teilräume 48, 49 beidseits der Trennwand 43 haben die Form von Kreiskegelstümpfen, weil die Formkerne hierfür im Bereich der Oberwand 41 etwas schmaler sind, als am unteren Ende, damit der Spritzgußteil leicht davon abgezogen werden kann. Oben (in Figur 3) hat also der Teilraum eine lichte Weite mit einem Durchmesser von 36 mm und unten von 38 mm. In der Oberwand 41 sind, ähnlich wie beim vorigen Beispiel, symmetrisch zwei Bohrungen 51 mit Innengewinde vorgesehen (wovon nur die linke zu sehen ist), in die entsprechende Einlaß- bzw. Auslaßstutzen 52 eingeschraubt werden. In diesem Beispiel handelt es sich um knieförmige Einlaß- bzw. Auslaßstutzen, deren Kupplungsenden 53 parallel zueinander und mit Abstand parallel oberhalb der Oberwand 41 zum Längsrand 45 weisen. Damit erfolgt hier das Einsetzen der Filtervorrichtung in eine Anlage in Pfeilrichtung 54 von Figur 4, also quer zur Längserstreckung des Filtergehäuses. Die Kupplungsenden 53 sind Teil von nicht besonders dargestellten Rohr-Schnellkupplungen.

Im Beispiel der Figur 3 und 5 existiert eine Unterwand 55 nur fragmentarisch, weil nämlich die Teilräume 48 und 49 direkt in gleich große Bohrungen 56, 57 mit Innengewinde übergehen. Diese Bohrungen 56, 57 werden durch Verschlußstopfen 58, 59 verschlossen, die damit den hauptsächlichsten Teil der Unterwand bilden. Diese Verschlußstopfen 58, 59 sind Scheiben mit einem Außengewindeabschnitt 61, und einem darüber vorspringenden Dichtungsflansch 62, in den ein Dichtungsring 63 eingelegt ist. An der Außenseite befindet sich jeweils eine längliche Vertiefung 64, in die ein Werkzeug (z.B. eine Münze) zum Drehen des Verschlußstopfens eingesetzt werden kann. Knapp oberhalb dieser "Unterwand" 55 ist ein Kanal in Form einer Bohrung 65 vorgesehen, der die Teilräume 48, 49 verbindet.

Diese lösbaren Verschlußstopfen empfehlen sich dann, wenn in die Teilräume 48, 49 austauschbare Filtereinsätze oder auszuwechselndes Filtergranulat etc. eingesetzt werden. Man kann aber auch, ähnlich wie bei Figur 1, eine geschlossene Unterwand aufschweißen. Weiterhin kann eine solche Unterwand kleinere Bohrungen mit kleineren Verschlußstopfen aufweisen, jedoch sollte deren Durchmesser wenigstens etwa 20 mm betragen um z.B. den Austausch von Filtergranulat nicht zu sehr zu behindern.

Es versteht sich weiterhin, daß auch der gesamte Mittelteil mit Umfangswand 42 und Trennwand 43, analog zum vorigen Beispiel als Abschnitt eines Strangpreßprofils ausgebildet sein kann. Oben wird dann eine Oberwand angeschweißt und unten erhalten die ausmündenden kreisförmigen Teilräume ein Innengewinde eingeschnitten, in das dann die Verschlußstopfen 58, 59 eingeschraubt werden. Es wären dann lediglich die Teilräume 48, 49 kreiszylindrisch entsprechend der anderen Herstellungstechnik.

Die Querschnittsform des Filtergehäuses nach Figur 4 nutzt zwar den Einbauraum nicht so optimal wie die Quaderform nach Figur 1 (die dort abgerundet gezeichneten Kanten können auch scharf belassen werden), jedoch beult sich ein Teilraum mit Kreisquerschnitt auch bei höherem Innendruck nicht aus. Eine Filtervorrichtung dieser Bauart kann daher ohne Formänderung einem Innendruck von mehr als 1 · 10⁶ Pascal (10 Bar) standhalten.

Als praktische Größen der Filtergehäuse haben sich folgende Abmessungen (Länge x Breite x Höhe) erwiesen:
73 x 44 x 150 mm (Figur 1, 2),
100 x 49 x 200 mm (Figur 3, 4, 5) oder
87 x 40 x 150 (nicht gezeichnet).

Im Beispiel der Figur 1 wurde angenommen, daß die Teilräume 18, 19 mit Aktivkohle gefüllt werden. Hierbei erfüllen die beiden relativ großflächigen Filtereinsätze 24 aus porösem Kunststoff die Funktion einer Ausfilterung von Partikeln aus der Flüssigkeit als auch des Zurückhaltens von Kohlestaubpartikeln der Aktivkohle. Die große Oberfläche der becherförmigen Filtereinsätze 24 erlaubt eine günstigere Strömungsverteilung. Es versteht sich, daß auch andere Filtermedien (z.B. Harz) anstelle von Aktivkohle oder auch die bekannten Papierfilterpatronen eingesetzt werden können. In diesem Fall können dann die Filtereinsätze 24 auch weggelassen werden.

Beim Ausführungsbeispiel der Figur 3 sind zwei das Filtergehäuse im Bereich der Trennwand 43 querende Befestigungsbohrungen 66 vorgesehen, die nicht mit den Teilräumen 48, 49 kommunizieren. Mit entsprechend hierin einzusetzenden Befestigungsschrauben kann die Filtervorrichtung zusätzlich in der Anlage gehalten werden, wodurch die Einlaß- und Auslaßstutzen 52 entlastet werden. Dies empfiehlt sich besonders dann, wenn die Anlage Vibrationen ausgesetzt ist, beispielsweise durch den Motor eines Kühlaggregates oder dergleichen.

In den gezeigten Ausführungsbeispielen sind die Einlaß- und Auslaßstutzen 52 identisch. Es ist (bei symmetrischer Füllung des Filtergehäuses ) gleichgültig wie herum das Filtergehäuse in die Anlage eingesetzt wird. Falls bei bestimmten Einsatzfällen eine Reinigung der Filtervorrichtung durch Rückspülung vorgesehen ist, genügt es dazu, die Filtervorrichtung mit vertauschten Anschlüssen einzusetzen. Es ist kein Umsteuerventil in der Anlage erforderlich. Wenn jedoch bei unsymmetrischer Füllung des Filtergehäuses etwa nur eine bestimmte Durchflußrichtung erlaubt ist, kann man Einlaß- und Auslaßstutzen unterschiedlicher Dimensionen vorsehen, oder einen Schlüsselstift in einer unsymmetrischen Position an der Oberwand anbringen, der in ein passendes Loch z.B. des Armaturenblocks 31 von Figur 1 eintauchen muß.

Man kann, was leicht einzusehen ist, eine ganze Batterie z.B. der quaderförmigen Filtervorrichtungen nach Figur 1 unmittelbar übereinander oder nebeneinander aufreihen bei komplexeren Filteranlagen.

Die Einlaß- und Auslaßstutzen 52 von Fig.3 beispielsweise können anstatt in eine Gewindebohrung 51 eingeschraubt zu werden, bereits beim Spritzgießen des Gehäuses mit eingesetzt und dadurch in der Oberwand 41 verankert werden. Schließlich können die Riegel 37 von Fig.1 mit einer gemeinsamen Platte so verbunden werden, daß eine Betätigung beider Kupplungen gemeinsam erfolgt.

## Patentansprüche

1. Filtervorrichtung im Volumenbereich des Filters von 30 bis 2000 cm³ für die Filterung von Flüssigkeiten in Getränkeautomaten mit einem Filtergehäuse mit einer Oberwand (11, 41), einer Unterwand (12, 55) und einer Umfangswand, (13-16; 42), mit einer ersten und zweiten Durchbrechung in der Oberwand, mit einem Einlaßstutzen in der ersten Durchbrechung und einem Auslaßstutzen in der zweiten Durchbrechung, wobei die Einlaß- und Auslaßstutzen (27, 52) mit anlagenseitigen Zufuhr- und Abfuhrleitungen für die zu filternde Flüssigkeit verbindbar sind, wobei die Einlaß- und Auslaßstutzen (27, 52) mit Kupplungsenden (28, 53) zur leicht lösbaren, druckfesten Verbindung mit den Zufuhr- bzw. Abfuhrleitung (32, 33) versehen sind, **gekennzeichnet** durch folgende Merkmale:
a) die Oberwand (11, 41) ist biegesteif, dicker als die angrenzende Umfangswand (13, 16; 42) und mit dieser unlösbar verbunden;
b) die Kupplungsenden (28) sind als korrespondierende Gegenstücke von an der Zufuhr bzw. Abfuhrleitung (32, 33) fest anbringbaren Hälften von Rohr-Schnellkupplungen (29) ausgebildet
c) das Filtergehäuse ist prismenförmig mit im wesentlichen rechteckiger oder ovaler Querschnittsform ausgeführt;
d) der Innenraum des Filtergehäuses ist durch eine längsverlaufende Trennwand (17, 23), die auf der Innenfläche der Oberwand mit gegenüberliegenden Innenflächen der Umfangswand (13, 14, 42) flüssigkeitsdicht verbunden sind, in zwei über einen Kanal (22, 65) in der Trennwand (17, 23) miteinander verbundene Teilräume (18, 19; 48, 49) gegliedert, in die je einer der Einlaß-/Auslaßstutzen (27, 52) mündet.

2. Filtervorrichtung nach Anspruch 1, dadurch gekennzeichnet, daß die Kupplungsenden (28) von Einlaß- und Auslaßstutzen (27) parallel zueinander und senkrecht von der Oberwand (11) weggerichtet angeordnet sind.

3. Filtervorrichtung nach Anspruch 1, dadurch gekennzeichnet, daß die Einlaß- und Auslaßstutzen (52) als Knierohrstücke ausgebildet sind, so daß deren Kupplungsenden (53) parallel zueinander und mit Abstand parallel oberhalb der Oberwand ausgerichtet sind.

4. Filtervorrichtung nach Anspruch 1, dadurch gekennzeichnet, daß das prismenförmig ausgebildete Filtergehäuse eine rechteckige Oberwand (11), eine rechteckige Unterwand (12) und eine aus vier rechteckigen Wandteilen (13, 14, 15, 16) bestehende Umfangswand zwischen der Ober- und Unterwand aufweist.

5. Filtervorrichtung nach Anspruch 1, dadurch gekennzeichnet, daß die Durchbrechungen senkrecht zur Ebene der Oberwand (11, 41) ausgerichtete Bohrungen (25, 51) mit Innengewinde sind und die Einlaß- und Auslaßstutzen (27, 52) einenendes korrespondierende Außengewinde aufweisen und damit in die Durchbrechungen einschraubbar sind.

6. Filtervorrichtung nach Anspruch 1, dadurch gekennzeichnet, daß die Unterwand (55) zumindest eine Bohrung (56, 57) mit wenigstens einem Durchmesser von 20 mm und mit Innengewinde aufweist, die durch einen einschraubbaren Verschlußstopfen (58, 59) verschließbar ist.

7. Filtervorrichtung nach Anspruch 1, dadurch gekennzeichnet, daß das Filtergehäuse als Vierkantprisma gestaltet ist, wobei die Breite der Oberwand (11) zu ihrer Länge und zur Höhe des Filtergehäuses im Verhältnis von etwa 1 : 1,7 : 3,4 steht.

8. Filtervorrichtung nach Anspruch 1, dadurch gekennzeichnet, daß das Filtergehäuse als Vierkantprisma gestaltet ist, wobei die Breite der Oberwand (11) zu ihrer Länge und zur Höhe des Filtergehäuses im Verhältnis von etwa 1 : 2 : 3,75 steht.

9. Filtervorrichtung nach Anspruch 7 oder 8, dadurch gekennzeichnet, daß die Breite der Oberwand (11) zwischen 40 und 45 mm mißt.

10. Filtervorrichtung nach Anspruch 1, dadurch gekennzeichnet, daß die erste und zweite Durchbrechung (25) auf einer geometrischen Mittellinie (26) parallel zur Längskante (13, 14) einer rechteckigen Oberwand (11) und symmetrisch bezüglich einer senkrecht zur Mittellinie verlaufenden Symmetrieachse angeordnet sind.

11. Filtervorrichtung nach Anspruch 10, dadurch gekennzeichnet, daß der Abstand zwischen den Durchbrechungen (25) zur Länge der Oberwand (11) im Verhältnis von etwa 1 : 2 steht.

12. Filtervorrichtung nach Anspruch 1, dadurch gekennzeichnet, daß das prismenförmige Filtergehäuse mit einer ovalen Ober- und Unterwand (41, 55) versehen ist.

13. Filtervorrichtung nach Anspruch 12, dadurch gekennzeichnet, daß zwei parallel gegenüberliegende gerade, äußere Längsränder (44, 45) der Oberwand (41) endseitig durch je einen halbkreisförmigen Rand (46, 47) verbunden sind.

14. Filtervorrichtung nach Anspruch 13, dadurch gekennzeichnet, daß die Länge der geraden Längsränder (44, 45) um wenige Millimeter größer ist als der Durchmesser der halbkreisförmigen Ränder (46, 47).

15. Filtervorrichtung nach Anspruch 14, dadurch gekennzeichnet, daß der Durchmesser der halbkreisförmigen Ränder (46, 47) etwa 47 mm beträgt und die Länge der geraden Längsränder (44, 45) etwa 52 mm, wobei die Höhe des Filtergehäuses etwa 200 mm beträgt.

16. Filtervorrichtung nach Anspruch 1, dadurch gekennzeichnet, daß im Bereich der Trennwand (43) zumindest eine das Filtergehäuse querende Befestigungsbohrung (66) vorgesehen ist, die nicht mit den Teilräumen (48, 49) kommuniziert.

17. Filtervorrichtung nach Anspruch 13, dadurch gekennzeichnet, daß die Durchbrechnungen (51) jeweils koaxial zu den halbkreisförmigen Rändern (46, 47) angeordnet sind.

## Claims

1. Filter device in the volume range of the filter of 30 to 2000 cubic centimetres for the filtering of liquids in automatic beverage dispensers with a filter housing with an upper wall (11, 41), a lower wall (12, 55) and a circumferential wall (13 to 16, 42), with a first and a second passage in the upper wall and with an inlet nipple in the first passage and an outlet nipple in the second passage, wherein the inlet and outlet nipples (27, 52) are connectable with feed and drain ducts, at the side of the plant, for the liquid to be filtered and wherein the inlet and outlet nipples (27, 52) are provided with coupling ends (28, 53) for the easily detachable pressure-tight connection respectively with the feed duct (32) and the drain duct (33), characterised by the following features:
a) the upper wall (11, 41) is resistant to bending, thicker than the adjoining circumferential wall (13, 16; 42) and undetachably connected therewith;
b) the coupling ends (28) are constructed as corresponding countermembers of halves, which are firmly mountable respectively at the feed duct (32) and the drain duct (33), of quick-action pipe couplings (32);
c) the filter housing is constructed in prismatic shape with substantially rectangular or oval cross-sectional shape;
d) the interior space of the filter housing is divided by a longitudinally extending partition (17, 23), which is liquid tightly connected on the inward surface of the upper wall with opposite inward surfaces of the circumferential wall (13, 14, 42), into two partial spaces (18, 19; 48, 49), which are connected one with the other by way of a channel (22, 65) in the partition (17, 23) and into which opens a respective one of the inlet and outlet nipples (27, 52).

2. Filter device according to claim 1, characterised thereby, that the coupling ends (28) of the inlet and outlet nipples (27) are arranged one parallelly to the other and directed perpendicularly away from the upper wall (11).

3. Filter device according to claim 1, characterised thereby, that the inlet and outlet nipples (52) are constructed as pipe elbow members so that their coupling ends are oriented one parallelly to the other and at a spacing parallelly above the upper wall.

4. Filter device according to claim 1, characterised thereby, that the filter housing constructed in prismatic shape comprises a rectangular upper wall (11), a rectangular lower wall (12) and a circumferential wall consisting of four rectangular wall parts (13, 14, 15, 16) between the upper wall and the lower wall.

5. Filter device according to claim 1, characterised thereby, that the passages are bores (25, 51), which are oriented perpendicularly to the plane of the upper wall (11, 41), with internal thread and the inlet and outlet nipples (27, 52) at one end each display a corresponding thread and are thereby threadable into the passages.

6. Filter device according to claim 1, characterised thereby, that the lower wall (55) displays at least one bore (56, 57) of a diameter of at least 20 millimetres with an internal thread and is closable by a closure plug (58, 59), which is threadable into it.

7. Filter device according to claim 1, characterised thereby, that the filter housing is structured as a four-cornered prism, wherein the width of the upper wall (11) is in the ratio of about 1:1.7:3.4 to its length and to the height of the filter housing.

8. Filter device according to claim 1, characterised thereby, that the filter housing is structured as a four-cornered prism, wherein the width of the upper wall (11) is in the ratio of about 1:2:3.75 to its length and to the height of the filter housing.

9. Filter device according to claim 7 or 8, characterised thereby, that the width of the upper wall (11) measures between 40 and 45 millimetres.

10. Filter device according to claim 1, characterised thereby, that the first and the second passage (25) are arranged on a geometric centre line (26) parallelly to the longitudinal edge (13, 14) of a rectangular upper wall (11) and symmetrically with respect to an axis of symmetry extending perpendicularly to the centre line.

11. Filter device according to claim 10, characterised thereby, that the spacing between the passages (25) is in the ratio of about 1:2 to the length of the upper wall (11).

12. Filter device according to claim 1, characterised thereby, that the prismatic filter housing is provided with an oval upper wall (41) and an oval lower wall (55).

13. Filter device according to claim 12, characterised thereby, that two parallelly opposite straight outer rims (44, 45) of the upper wall (41) are connected at the ends by a respective semicircular rim (46, 47).

14. Filter device according to claim 13, characterised thereby, that the length of the straight outer rims (44, 45) is a few millimetres greater than the diameter of the semicircular rims (46, 47).

15. Filter device according to claim 14, characterised thereby, that the diameter of the semicircular rims (46, 47) amounts to about 47 millimetres and the length of the straight outer rims (44, 45) amounts to about 52 millimetres, while the height of the filter housing amounts to about 200 millimetres.

16. Filter device according to claim 1, characterised thereby, that at least one fastening bore (66), which traverses the filter housing and does not communicate with the partial spaces (48, 49), is provided in the region of the partition (43).

17. Filter device according to claim 13, characterised thereby, that the passages (51) are each arranged co-axially with the semicircular rims (46, 47).

## Revendications

1. Dispositif de filtration d'une capacité comprise entre 30 et 2000 cm³ destiné à la filtration de liquides dans des distributeurs automatiques de boissons, comportant un boîtier de filtre avec une paroi supérieure (11, 41), une paroi inférieure (12, 55) et une paroi périphérique (13-16; 42), un premier et un deuxième passage dans la paroi supérieure, un raccord d'entrée monté dans le premier passage et un raccord de sortie monté dans le deuxième passage, les raccords d'entrée et de sortie (27, 52) pouvant être connectés à des conduites d'entrée et de sortie du liquide à filtrer et étant pourvus d'extrémités de branchement (28, 53) permettant de les connecter de manière étanche à la pression et de manière facilement démontable aux conduites d'entrée et de sortie (32, 33), dispositif caractérisé par les caractéristiques suivantes:
a) la paroi supérieure (11, 41) est rigide en flexion, a une épaisseur supérieure à la paroi périphérique (13, 16; 42) voisine et est lié de manière indémontable à celle-ci;
b) les extrémités de branchement (28) sont agencées sous forme d'éléments conjugués de demi raccords rapides (32, 33) solidaires des conduites d'entrée et de sortie (32, 33);
c) le boîtier de filtre a la forme d'un prisme de section sensiblement rectangulaire ou ovale;
d) le volume intérieur du boîtier de filtre est divisé par une cloison (17, 23) longitudinale qui est reliée de manière étanche aux liquides à la face intérieure de la paroi supérieure et à des surfaces intérieures opposées de la paroi périphérique (13, 14, 42) pour former deux chambres partielles (18, 19; 48, 49) qui communiquent entre elles par un conduit (22, 65) dans la cloison (17, 23) et dans lesquelles débouchent respectivement les raccords d'entrée et de sortie (27, 52).

2. Dispositif de filtration selon la revendication 1, caractérisé par le fait que les extrémités de branchement (28) des raccords d'entrée et de sortie (27) sont parallèles entre elles et perpendiculaires à la paroi supérieure (11).

3. Dispositif de filtration selon la revendication 1, caractérisé par le fait que les raccords d'entrée et de sortie (52) sont agencés sous forme de coudes, de sorte que leurs extrémités de branchement (53) sont parallèles entre elles et s'étendent parallèlement à la paroi supérieure, à distance au-dessus de celle-ci.

4. Dispositif de filtration selon la revendication 1, caractérisé par le fait que le boîtier de filtre en forme de prisme comporte une paroi supérieure (11) rectangulaire, une paroi inférieure (12) rectangulaire et une paroi périphérique qui est formée de quatre parties de paroi (13, 14, 15, 16) et est disposée entre les parois supérieure et inférieure.

5. Dispositif de filtration selon la revendication 1, caractérisé par le fait que les passages sont des perçages (25, 51) munis d'un filetage intérieur, perpendiculaires au plan de la paroi supérieure (11, 41), et que les raccords d'entrée et de sortie (27, 52) comportent à l'une de leurs extrémités un filetage extérieur adapté permettant de les visser dans les passages.

6. Dispositif de filtration selon la revendication 1, caractérisé par le fait que la paroi inférieure (55) comporte au moins un perçage (56, 57) de 20 mm minimum de diamètre avec un filetage intérieur, lequel perçage est obturé par un bouchon (58, 59) vissé.

7. Dispositif de filtration selon la revendication 1, caractérisé par le fait que le boîtier de filtre se présente sous la forme d'un prisme quadrangulaire, le rapport de la largeur de la paroi supérieure (11) à sa longueur et à la hauteur du boîtier de filtre étant d'environ 1 : 1,7 : 3,4.

8. Dispositif de filtration selon la revendication 1, caractérisé par le fait que le boîtier de filtre se présente sous la forme d'un prisme quadrangulaire, le rapport de la largeur de la paroi supérieure (11) à sa longueur et à la hauteur du boîtier de filtre étant d'environ 1 : 2 : 3,75.

9. Dispositif de filtration selon la revendication 7 ou 8, caractérisé par le fait que la largeur de la paroi supérieure (11) mesure entre 40 et 45 mm.

10. Dispositif de filtration selon la revendication 1, caractérisé par le fait que les premier et deuxième passages (25) sont disposés sur un axe médian (26) géométrique parallèle à l'arête longitudinale (13, 14) d'une paroi supérieure (11) rectangulaire et symétriquement par rapport à un axe de symétrie perpendiculaire à l'axe médian.

11. Dispositif de filtration selon la revendication 10, caractérisé par le fait que le rapport de la distance entre les passages (25) à la longueur de la paroi supérieure (11) est d'environ 1 : 2.

12. Dispositif de filtration selon la revendication 1, caractérisé par le fait que le boîtier de filtre en forme de prisme est pourvu de parois supérieure et inférieure (41, 55) ovales.

13. Dispositif de filtration selon la revendication 12, caractérisé par le fait que deux bords longitudinaux (44, 45) extérieurs, parallèles, rectilignes, en vis-à-vis de la paroi supérieure (41) sont reliés côté extrémité chacun par un bord (46, 47) semi-circulaire.

14. Dispositif de filtration selon la revendication 13, caractérisé par le fait que la longueur des bords longitudinaux (44, 45) rectilignes est supérieure de quelques millimètres au diamètre des bords (46, 47) semi-circulaires.

15. Dispositif de filtration selon la revendication 14, caractérisé par le fait que le diamètre des bords (46, 47) semi-circulaires est d'environ 47 mm et la longueur des bords longitudinaux (44, 45) rectilignes est d'environ 52 mm, la hauteur du boîtier de filtre étant de 200 mm environ.

16. Dispositif de filtration selon la revendication 1, caractérisé par le fait qu'il est prévu dans la région de la cloison (43) au moins un trou de fixation (66) qui traverse le boîtier de filtre et ne communique pas avec les chambres partielles (48, 49).

17. Dispositif de filtration selon la revendication 13, caractérisé par le fait que les passages (51) sont disposés respectivement coaxialement aux bords semi-circulaires (46, 47).
